# EUROPEAN PATENT APPLICATION

(11) **EP 4 692 525 A1**
(43) Date of publication of application: **11.02.2026**
(21) Application number: 24779971.1
(22) Date of filing: 22.03.2024
(51) Int. Cl.: F02C 6/00, B64D 27/10, B64D 27/16, F01D 15/10, F02C 6/20, F02C 7/042, F02C 7/057, F02C 9/20, F02K 3/04, H02P 9/04

(54) **AIRCRAFT POWER GENERATION SYSTEM**

(30) Priority: 29.03.2023 JP 2023053576
(71) Applicant: KAWASAKI JUKOGYO KABUSHIKI KAISHA, Kobe-shi, Hyogo 650-8670 (JP)
(72) Inventor: OKUWA, Tatsuya, Kobe-shi, Hyogo 650-8670 (JP)
(74) Representative: Dantz, Jan Henning
(86) International application number: PCT/JP2024/011304
(87) International publication number: WO 2024/203853

(57) **Abstract**

An aircraft power generation system includes: a turbo fan engine including a variable stator vane which is located upstream of a fan and whose installation angle is variable and a vane actuator that drives the variable stator vane; a power generator mechanically connected to a low-pressure shaft of the engine; and processing circuitry configured to control the vane actuator. The processing circuitry is configured to, when it is determined that the power generator generates electric power during an operation of the turbo fan engine, execute an electric power generating mode of controlling the vane actuator to change the installation angle of the variable stator vane such that the flow rate of air flowing through the fan decreases.

## Description

### Technical Field

The present disclosure relates to an aircraft power generation system.

### Background Art

PTL 1 discloses a turbo fan engine for an aircraft. A power generator is mechanically connected to a rotating shaft of the engine. Electrical equipment mounted on an airframe of the aircraft is electrically connected to the power generator.

### Citation List

### Patent Literature

PTL 1: US 2020/0079513 A1

### Summary of Invention

### Technical Problem

In recent years, since an aircraft includes electrical equipment, the improvement of an electric power generation performance of the aircraft is required. However, when a power generator connected to a rotating shaft of an engine is increased in size, problems, such as a weight increase, occur.

An object of one aspect of the present disclosure is to provide an aircraft power generation system that can efficiently generate electric power while suppressing an increase in the size of a power generator.

### Solution to Problem

An aircraft power generation system according to one aspect of the present disclosure includes: a turbo fan engine including an engine core including a low-pressure compressor, a high-pressure compressor, a combustor, a high-pressure turbine, a low-pressure turbine, a low-pressure shaft mechanically connecting the low-pressure compressor to the low-pressure turbine, and a high-pressure shaft mechanically connecting the high-pressure compressor to the high-pressure turbine, a fan located upstream of the engine core and driven by the low-pressure shaft, a bypass passage located downstream of the fan and outside the engine core, a variable stator vane which is located upstream of the fan and whose installation angle is variable, and a vane actuator that drives the variable stator vane; a power generator mechanically connected to the low-pressure shaft; and processing circuitry configured to control the vane actuator. The processing circuitry is configured to: determine whether or not the power generator generates electric power during an operation of the turbo fan engine; when it is determined that the power generator does not generate the electric power during the operation of the turbo fan engine, execute a normal mode of controlling the vane actuator such that the installation angle of the variable stator vane becomes a predetermined reference angle; and when it is determined that the power generator generates the electric power during the operation of the turbo fan engine, execute an electric power generating mode of controlling the vane actuator to change the installation angle of the variable stator vane such that the flow rate of air flowing through the fan decreases.

### Advantageous Effects of Invention

According to one aspect of the present disclosure, the flow rate of the air flowing through the fan during the electric power generation performed by the power generator can be reduced. Therefore, large driving force can be transmitted from the low-pressure shaft of the engine core to the power generator by reducing the work of the fan. As a result, the power generator can efficiently generate electric power while suppressing an increase in the size of the power generator.

### Brief Description of Drawings

FIG. 1 is a schematic diagram showing an aircraft power generation system according to Embodiment 1.
FIG. 2 is an operation explanatory diagram showing variable stator vanes of a turbo fan engine of FIG. 1 as viewed in a radial direction.
FIG. 3 is a flowchart that explains the control of the system of FIG. 1.
FIG. 4 is a schematic diagram showing the aircraft power generation system according to Embodiment 2.
FIG. 5 is a schematic diagram showing the aircraft power generation system according to Embodiment 3.
FIG. 6 is a schematic diagram showing the aircraft power generation system according to Embodiment 4.
FIG. 7 is a schematic diagram showing the aircraft power generation system according to Embodiment 5.
FIG. 8 is a perspective view that explains the operation of a stator vane assembly of FIG. 7.
FIG. 9 is a partial perspective view showing a fan of FIG. 8.
FIG. 10 is a front view showing the turbo fan engine of FIG. 7.

### Description of Embodiments

Hereinafter, embodiments will be described with reference to the drawings.

In the following description, a direction in which an axis X of a low-pressure shaft 42 of an engine 10 and an axis X of a high-pressure shaft 41 of the engine 10 extend may be referred to as an axial direction X. The terms "front" and "front side" denote an upstream side in a direction in which air flows in the engine 10, and the terms "rear" and "rear side" denote a downstream side in the direction in which the air flows in the engine 10. To be specific, the terms "front" and "front side" denote a side where a fan 22 is located in the axial direction X of the engine 10, and the terms "rear" and "rear side" denote a side opposite to the side where the fan 22 is located in the axial direction X of the engine 10. A "radial direction R" denotes a direction orthogonal to the axis X of the engine 10. A "circumferential direction C" denotes a direction around the axis X of the engine 10. Moreover, examples of the "aircraft" in the description of this application include airplanes and unmanned flying objects which fly by thrust generated by an engine.

### Embodiment 1

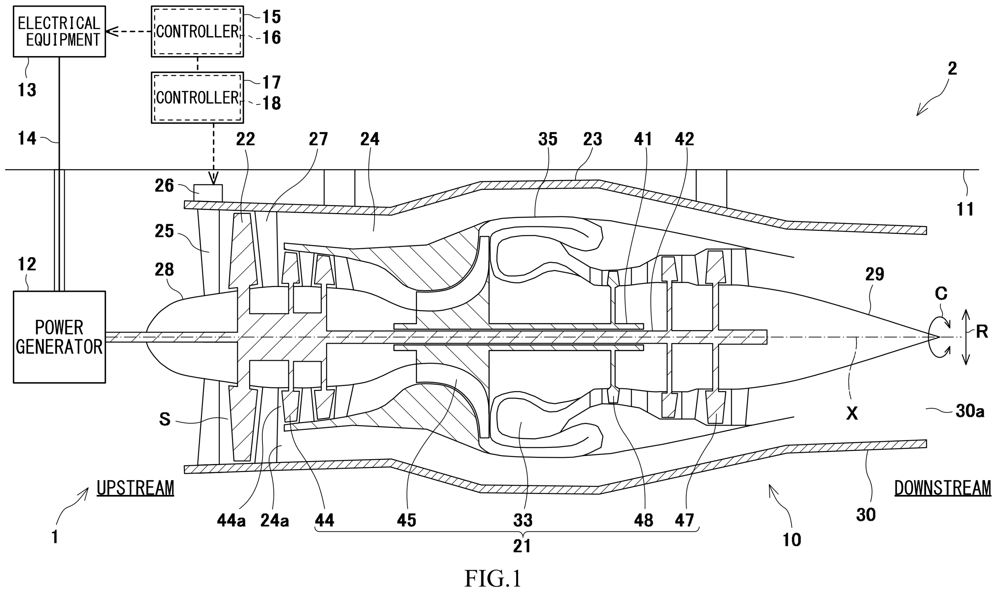

FIG. 1 is a schematic diagram showing an aircraft power generation system 1 according to an embodiment. As shown in FIG. 1, an aircraft 2 includes the aircraft power generation system 1. The aircraft power generation system 1 includes the turbo fan engine 10. The turbo fan engine 10 is supported by an airframe 11 of the aircraft 2. For example, the turbo fan engine 10 is located at a fuselage or main wing of the aircraft 2. The turbo fan engine 10 includes an engine core 21, the fan 22, an outer shell 23, a bypass passage 24, variable stator vanes 25, a vane actuator 26, a stator vane 27, a nose cone 28, a tail cone 29, and the like.

The engine core 21 includes a low-pressure compressor 44, a high-pressure compressor 45, a combustor 33, a high-pressure turbine 48, a low-pressure turbine 47, the low-pressure shaft 42, the high-pressure shaft 41, and an inner shell 35. The turbo fan engine 10 is a two-shaft gas turbine engine. The high-pressure shaft 41 is a tubular shaft including a hollow space therein. The low-pressure shaft 42 is in the hollow space of the high-pressure shaft 41. The axis X of the low-pressure shaft 42 and the axis X of the high-pressure shaft 41 coincide with each other. The low-pressure shaft 42 and the high-pressure shaft 41 extend in a front-rear direction of the turbo fan engine 10. The low-pressure compressor 44, the high-pressure compressor 45, the combustor 33, the high-pressure turbine 48, and the low-pressure turbine 47 are lined up in this order along the axis X from the front side to the rear side. Although the turbo fan engine 10 is the two-shaft gas turbine engine, the turbo fan engine 10 may be a gas turbine engine including two or more shafts.

The low-pressure compressor 44 is an axial flow compressor, and the high-pressure compressor 45 is a centrifugal compressor. However, the types of the low-pressure compressor 44 and the high-pressure compressor 45 are not limited to these. The high-pressure shaft 41 mechanically couples the high-pressure compressor 45 to the high-pressure turbine 48. The low-pressure shaft 42 mechanically couples the low-pressure compressor 44 to the low-pressure turbine 47.

The low-pressure turbine 47 is coupled to the fan 22 through the low-pressure shaft 42. The fan 22 is located upstream of the engine core 21. The fan 22 is connected to a front portion of the low-pressure shaft 42 and rotates together with the low-pressure shaft 42. Specifically, the fan 22 is driven by the low-pressure shaft 42.

The inner shell 35 surrounds the low-pressure compressor 44, the high-pressure compressor 45, the combustor 33, the high-pressure turbine 48, and the low-pressure turbine 47 from the outside in the radial direction R. The inner shell 35 has a tubular shape extending in the axial direction X. The outer shell 23 is located outside the engine core 21 and the fan 22 in the radial direction R. The outer shell 23 has a tubular shape extending in the axial direction X. The outer shell 23 is longer than the inner shell 35 in the axial direction X and projects forward and rearward beyond the inner shell 35. The outer shell 23 is located away from the inner shell 35 in the radial direction R. An annular space between an inner peripheral surface of the outer shell 23 and an outer peripheral surface of the inner shell 35 serves as the bypass passage 24 which bypasses the engine core 21 and through which air flows.

A front end of the inner shell 35 separates an annular inlet 44a of the engine core 21 (i.e., the inlet 44a of the low-pressure compressor 44) and an annular inlet 24a of the bypass passage 24 from each other. When viewed in the axial direction X, the inlet 24a of the bypass passage 24 is located outside the inlet 44a of the engine core 21 in the radial direction R. An annular common air passage S that is open to the front side of the turbo fan engine 10 is defined in front of the inlet 44a of the engine core 21 and the inlet 24a of the bypass passage 24. When viewed from the front, the common air passage S overlaps the inlet 44a of the engine core 21 and the inlet 24a of the bypass passage 24. The fan 22 is located in the common air passage S. The stator vane 27 is located downstream of the fan 22 in the common air passage S.

The variable stator vanes 25 are located upstream of the fan 22 in the common air passage S. Each variable stator vane 25 is a stator vane whose installation angle is variable. When viewed from the front, the variable stator vanes 25, the fan 22, and the stator vane 27 overlap the inlet 44a of the engine core 21 and the inlet 24a of the bypass passage 24. Part of the air that has been drawn in by the fan 22 from the front side through the variable stator vanes 25 flows into the inlet 44a of the engine core 21, and the rest of the air flows into the inlet 24a of the bypass passage 24. The vane actuator 26 is located outside the outer shell 23. The vane actuator 26 drives the variable stator vanes 25 so as to change the installation angles of the variable stator vanes 25.

The nose cone 28 is located in front of the fan 22. The nose cone 28 decreases in diameter toward the front side of the turbo fan engine 10. The nose cone 28 defines part of an inner peripheral surface of the common air passage S. The low-pressure shaft 42 penetrates the nose cone 28 and extends forward. The tail cone 29 is located behind the low-pressure turbine 47. The tail cone 29 decreases in diameter toward the rear side of the turbo fan engine 10. The tail cone 29 projects rearward beyond the inner shell 35. A rear portion of the outer shell 23 serves as an exhaust nozzle 30 including an exhaust port 30a defined between the tail cone 29 and the outer shell 23. A nacelle may be located outside the outer shell 23.

The aircraft power generation system 1 includes a power generator 12. The power generator 12 is located in front of the engine core 21 on the axis X of the low-pressure shaft 42. The power generator 12 is located in front of the turbo fan engine 10 and supported by the airframe 11. The power generator 12 may be accommodated in an internal space of the nose cone 28. The power generator 12 is, for example, a power generator having relatively high output and large capacity. The power generator 12 is supported by, for example, the fuselage or main wing of the aircraft 2. The low-pressure shaft 42 of the turbo fan engine 10 is mechanically connected to a rotor of the power generator 12. To be specific, the power generator 12 is driven by the low-pressure shaft 42 of the turbo fan engine 10.

At least one piece of electrical equipment 13 is mounted on the airframe 11 or the turbo fan engine 10. The electrical equipment 13 consumes electric power during the operation. The electrical equipment 13 is not especially limited but may be, for example, a laser irradiator. The power generator 12 is connected to the electrical equipment 13 through an electric power line 14. The electric power generated by the power generator 12 is supplied to the electrical equipment 13 through the electric power line 14. To be specific, the electrical equipment 13 is a load on the power generator 12. The electrical equipment 13 is controlled by a controller 15. For example, the controller 15 is used to control an airframe control target object of the aircraft 2.

The controller 15 includes processing circuitry 16. For example, the controller 15 includes a processor and a memory. Specifically, the controller 15 includes a CPU, a system memory, a storage memory, and the like. The CPU is a central processing unit. The system memory is, for example, a RAM. The storage memory is one example of a computer-readable medium and is a non-transitory tangible medium. The storage memory may include a ROM. The storage memory may include a hard disk, a flash memory, or a combination thereof. The storage memory stores a program. A configuration in which the CPU executes the program read out into the system memory is one example of the processing circuitry 16.

The aircraft power generation system 1 includes a controller 17 that controls the vane actuator 26. For example, the controller 17 is used to control an engine control target object of the aircraft 2. For example, the controller 17 controls the vane actuator 26 and a fuel valve that supplies fuel to the combustor 33.

The controller 17 includes processing circuitry 18. For example, the controller 17 includes a processor and a memory. Specifically, the controller 17 includes a CPU, a system memory, a storage memory, and the like. The CPU is a central processing unit. The system memory is, for example, a RAM. The storage memory is one example of a computer-readable medium and is a non-transitory tangible medium. The storage memory may include a ROM. The storage memory may include a hard disk, a flash memory, or a combination thereof. The storage memory stores a program. A configuration in which the CPU executes the program read out into the system memory is one example of the processing circuitry 18.

A rotational speed sensor that detects the rotational speed of the fan 22 is electrically connected to the controller 17. The processing circuitry 18 of the controller 17 is communicably connected to the processing circuitry 16 of the controller 15. When the processing circuitry 16 transmits a predetermined operation request to the electrical equipment 13, the processing circuitry 16 also transmits a signal indicating this fact to the processing circuitry 18. Thus, the processing circuitry 18 can detect that the processing circuitry 16 has transmitted the predetermined operation request to the electrical equipment 13. The predetermined operation request may be, for example, a request that makes the electrical equipment 13 prepare for its start, a request that starts the electrical equipment 13, or a request that makes the electrical equipment 13 operate so as to consume electric power equal to or greater than a predetermined value. The controller 15 and the controller 17 may be integrated with each other as a single controller.

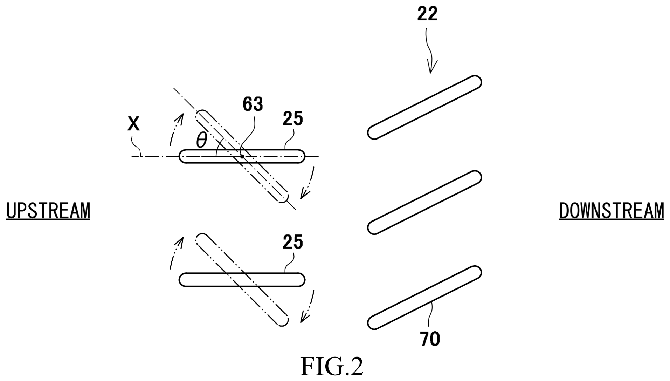

FIG. 2 is an operation explanatory diagram showing the variable stator vanes 25 of the turbo fan engine 10 of FIG. 1 as viewed in the radial direction R. As shown in FIG. 2, the fan 22 includes fan blades 70 lined up at intervals in the circumferential direction C. The variable stator vanes 25 lined up at intervals in the circumferential direction C are located upstream of the fan 22. The variable stator vanes 25 change their installation angles θ by being driven by the vane actuator 26 (see FIG. 1). Under the same operation condition of the turbo fan engine 10, the flow rate of the air flowing from the variable stator vanes 25 shown by two-dot chain lines in FIG. 2 to the fan 22 is lower than the flow rate of the air flowing from the variable stator vanes 25 shown by solid lines in FIG. 2 to the fan 22. For example, the installation angle θ of the variable stator vane 25 shown by the two-dot chain line in FIG. 2 is larger than the installation angle of the variable stator vane 25 shown by the solid line in FIG. 2.

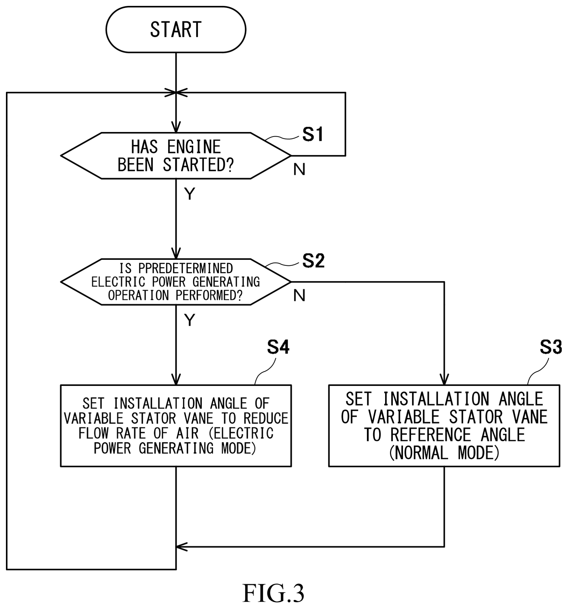

FIG. 3 is a flowchart that explains the control of the aircraft power generation system 1 of FIG. 1. Hereinafter, details of the processing performed by the processing circuitry 18 will be described based on the flow of FIG. 3 with suitable reference to FIGS. 1 and 2. First, power supply to the aircraft power generation system 1 is turned on, the processing circuitry 18 determines whether or not the turbo fan engine 10 has been started (Step S1).

The processing circuitry 18 determines whether or not the power generator 12 generates electric power during the operation of the turbo fan engine 10 (Step S2). Specifically, when the processing circuitry 18 detects that the processing circuitry 16 of the controller 15 of the airframe has transmitted the predetermined operation request to the electrical equipment 13, the processing circuitry 18 determines that the power generator 12 generates electric power. For example, when the processing circuitry 18 receives the signal indicating that the operation request has been transmitted to the electrical equipment 13, from the processing circuitry 16 of the controller 15, the processing circuitry 18 determines that the power generator 12 generates electric power. The electric power generating operation that is determined as the power generator 12 generating electric power is not limited by the current value, but may be defined as the electric power generating operation in which a current equal to or greater than a predetermined value is generated. In the aircraft power generation system 1, since large driving force can be transmitted from the low-pressure shaft 41 of the engine core 21 to the power generator 12 by reducing the work of the fan 22, it is suitable to define the electric power generating operation as the operation that generates the current equal to or greater than the predetermined value. The processing circuitry 16 of the controller 15 may autonomously output the operation request to the electrical equipment 13 or may output the operation request to the electrical equipment 13 in response to an instruction from an operator.

When the processing circuitry 18 determines that the power generator 12 does not generate electric power during the operation of the turbo fan engine 10 (No in Step S2), the processing circuitry 18 executes a normal mode. In the normal mode, the processing circuitry 18 controls the vane actuator 26 such that the installation angle θ of each variable stator vane 25 becomes a predetermined reference angle (Step S3). The reference angle of the installation angle θ of the variable stator vane 25 is not especially limited. However, the installation angle θ of the variable stator vane 25 shown by the solid line in FIG. 2 may be regarded as zero. To be specific, when the determination in Step S2 is No, when viewed in a direction in which a rotation axis line 63 of the variable stator vane 25 extends, the vane actuator 26 may be controlled such that an angle between the axis X (see FIG. 1) and a chord line of the variable stator vane 25 becomes zero. In the present embodiment, the reference angle of the installation angle θ of the variable stator vane 25 is fixed. However, the reference angle may change in accordance with a condition other than the determination in Step S2.

When the determination in Step S2 is No, the processing circuitry 18 controls a fuel injector of the combustor 33 to adjust the amount of fuel supplied to the combustor 33 such that a corrected rotational speed of the fan 22 becomes a target corrected rotational speed. The corrected rotational speed is a rotational speed obtained by converting the rotational speed of the fan 22 under a specified condition. The target corrected rotational speed may be input by the operator or may be calculated by the processing circuitry 16 or the processing circuitry 18.

When the processing circuitry 18 determines that the power generator 12 generates electric power during the operation of the turbo fan engine 10 (Yes in Step S2), the processing circuitry 18 executes an electric power generating mode. In the electric power generating mode, the processing circuitry 18 controls the vane actuator 26 to change the installation angles θ of the variable stator vanes 25 such that the flow rate of the air flowing through the fan 22 decreases (Step S4). For example, when the determination in Step S2 is Yes, as shown by the two-dot chain line in FIG. 2, the processing circuitry 18 may control the vane actuator 26 to increase the installation angles θ of the variable stator vanes 25. The target value of the installation angle θ of each variable stator vane 25 in the electric power generating mode may be a fixed value or a variable value.

The processing circuitry 18 may change the installation angles θ of the variable stator vanes 25 in accordance with the amount of electric power required by the electrical equipment 13. For example, the processing circuitry 18 may control the vane actuator 26 to adjust the installation angles θ of the variable stator vanes 25 such that the flow rate of the air flowing through the fan 22 decreases as the amount of electric power required by the electrical equipment 13 increases.

Specifically, the processing circuitry 18 receives from the controller 15 a signal including required electric power amount information indicating the amount of electric power required by the electrical equipment 13. When the amount of electric power required by the electrical equipment 13 is predetermined, the processing circuitry 18 may prestore the required electric power amount information. Based on a rule that defines a relationship between the amount of electric power required and the installation angle θ of the variable stator vane 25, the processing circuitry 18 acquires the installation angle θ corresponding to the amount of electric power required indicated by the required electric power amount information, and controls the vane actuator 26 such that the acquired installation angle θ is achieved. For example, the rule may be a reference table that defines the installation angle θ corresponding to the amount of electric power required or a calculation formula that takes the amount of electric power required as an input and outputs the installation angle θ.

The processing circuitry 18 may change the installation angles θ of the variable stator vanes 25 in accordance with a flight state (such as a flight altitude or a Mach number). For example, when the processing circuitry 18 intends to increase the flight altitude, the processing circuitry 18 may reduce the installation angles θ of the variable stator vanes 25. For example, when the processing circuitry 18 intends to reduce the Mach number, the processing circuitry 18 may increase the installation angles θ of the variable stator vanes 25.

Specifically, the processing circuitry 18 receives a signal including flight state information indicating the flight state (such as the flight altitude or the Mach number), from the controller 15. The processing circuitry 18 may receive the flight state information from a sensor connected to the processing circuitry 18. Based on a rule that defines a relationship between the flight state and the installation angle θ of the variable stator vane 25, the processing circuitry 18 acquires the installation angle θ corresponding to the flight state indicated by the flight state information and controls the vane actuator 26 such that the acquired installation angle θ is achieved. For example, the rule may be a reference table that defines the installation angle θ corresponding to the flight state or a calculation formula that takes the flight state as an input and outputs the installation angle θ.

In the electric power generating mode, when the corrected rotational speed of the fan 22 does not coincide with the target corrected rotational speed, the processing circuitry 18 controls the fuel injector of the combustor 33 to adjust the amount of fuel supplied to the combustor 33 such that the corrected rotational speed of the fan 22 becomes the target corrected rotational speed.

The control of changing the installation angles θ of the variable stator vanes 25 to reduce the flow rate of the air flowing through the fan 22 may be started after the power generator 12 has actually started generating electric power or may be started before the power generator 12 actually starts generating electric power.

According to the above-described configuration, the flow rate of the air flowing through the fan 22 during the electric power generation performed by the power generator 12 decreases. Therefore, large driving force can be transmitted from the low-pressure shaft 42 of the engine core 21 to the power generator 12 by reducing the work of the fan 22. As a result, the power generator 12 can efficiently generate electric power while suppressing an increase in the size of the power generator 12.

### Embodiment 2

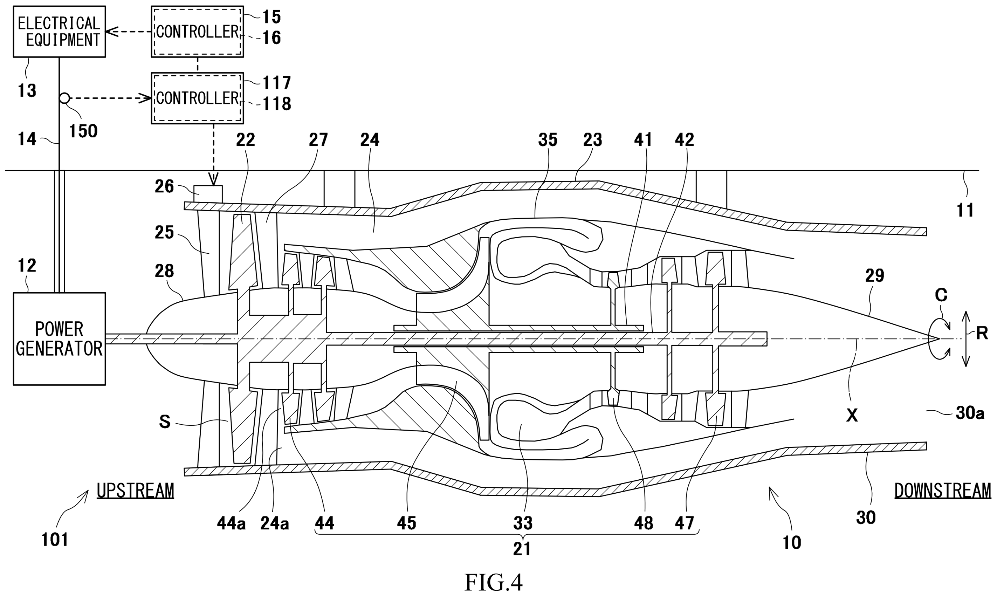

FIG. 4 is a schematic diagram showing an aircraft power generation system 101 according to Embodiment 2. The same reference signs are used for the same components as in Embodiment 1, and explanations thereof are omitted. As shown in FIG. 4, the aircraft power generation system 101 includes a current sensor 150 that detects a current generated by the power generator 12. For example, the current sensor 150 detects the current flowing through the electric power line 14. Processing circuitry 118 of a controller 117 receives a detected value of the current sensor 150.

In Step S2 of FIG. 3, when the current sensor 150 detects a current value equal to or greater than a predetermined value, the processing circuitry 118 determines that the power generator 12 generates electric power. In accordance with the result of the determination, the processing circuitry 118 executes Step S3 or S4 of FIG. 3 as with Embodiment 1.

In the electric power generating mode of Step S4, the processing circuitry 118 controls the vane actuator 26 to change the installation angles θ of the variable stator vanes 25 such that the corrected rotational speed of the fan 22 becomes the target corrected rotational speed. When the corrected rotational speed of the fan 22 does not reach the target corrected rotational speed although the installation angle θ of each variable stator vane 25 has reached the upper limit, the processing circuitry 118 controls the fuel injector of the combustor 33 to adjust the amount of fuel supplied to the combustor 33 such that the corrected rotational speed of the fan 22 becomes the target corrected rotational speed.

According to this, the processing circuitry 118 can easily grasp the electric power generation performed by the power generator 12 without receiving a signal from the processing circuitry 16 of the controller 15. Since the other components are the same as those in Embodiment 1, explanations thereof are omitted.

### Embodiment 3

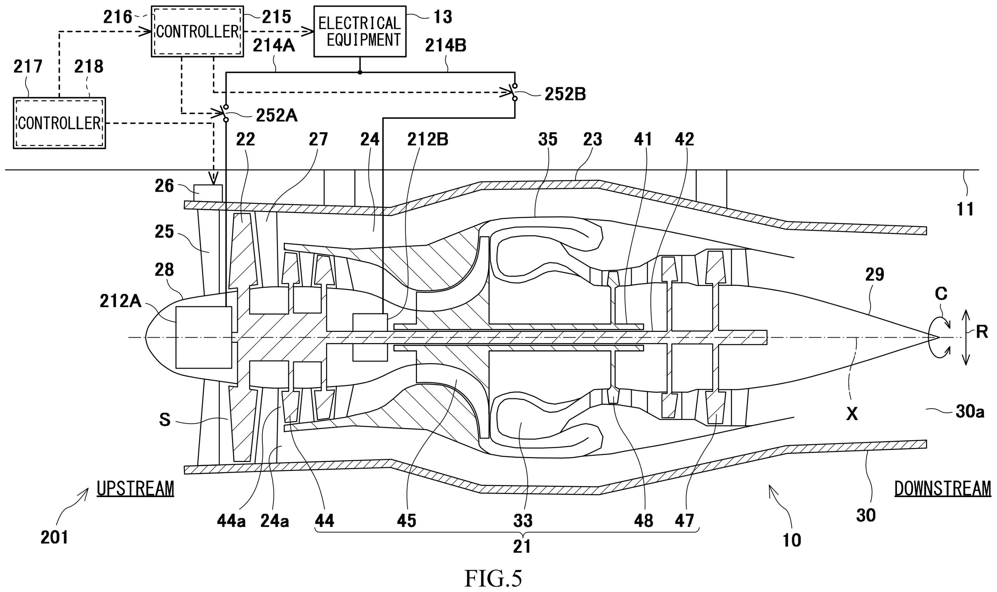

FIG. 5 is a schematic diagram showing an aircraft power generation system 201 according to Embodiment 3. The same reference signs are used for the same components as in Embodiment 1, and explanations thereof are omitted. As shown in FIG. 5, the aircraft power generation system 201 includes a first power generator 212A and a second power generator 212B. The first power generator 212A is located in front of the engine core 21 on the axis X. Moreover, as shown in FIG. 5, the first power generator 212A may be accommodated in the internal space of the nose cone 28. A rotor of the first power generator 212A is mechanically connected to the low-pressure shaft 42 of the turbo fan engine 10. To be specific, the first power generator 212A generates electric power by being driven by the low-pressure shaft 42.

The second power generator 212B is accommodated in an internal space of the engine core 21 of the turbo fan engine 10. For example, the second power generator 212B is located between the low-pressure compressor 44 and the high-pressure compressor 45 on the axis X. A rotor of the second power generator 212B is mechanically connected to the high-pressure shaft 41 of the turbo fan engine 10. To be specific, the second power generator 212B generates electric power by being driven by the high-pressure shaft 41.

The first power generator 212A is connected to the electrical equipment 13 through an electric power line 214A. The second power generator 212B is connected to the electrical equipment 13 through an electric power line 214B. As one example, a relay 252A is located on the electric power line 214A, and a relay 252B is located on the electric power line 214B. Processing circuitry 216 of a controller 215 controls the electrical equipment 13 and also controls the relays 252A and 252B. For example, while the processing circuitry 216 is operating the electrical equipment 13, the processing circuitry 216 may open and close the relays 252A and 252B in accordance with the operating state of the turbo fan engine 10.

When processing circuitry 218 of a controller 217 detects that the processing circuitry 216 of the controller 215 has transmitted the predetermined operation request to the electrical equipment 13, the processing circuitry 218 determines that the first power generator 212A generates electric power. In accordance with the result of the determination, the processing circuitry 218 executes Step S3 or S4 of FIG. 3 as with Embodiment 1. According to this configuration, the second power generator 212B can be utilized to generate electric power required by the airframe 11 or the turbo fan engine 10, and in addition, the first power generator 212A can be utilized to additionally generate electric power. This can meet various electric power generation needs of the aircraft.

Electrical equipment supplied with electric power from the first power generator 212A and electrical equipment supplied with electric power from the second power generator 212B may be different from each other. For example, the first power generator 212A may supply electric power to the electrical equipment 13 of the airframe 11, and the second power generator 212B may supply electric power to the electrical equipment 13 of the turbo fan engine 10.

Since the other components are the same as those in Embodiment 1 or 2, explanations thereof are omitted. Moreover, as with the other embodiments, the first power generator 212A may be located in front of the turbo fan engine 10. Furthermore, the power generator 12 in each of the above-described and below-described embodiments may be accommodated in the internal space of the nose cone 28 as with the present embodiment.

### Embodiment 4

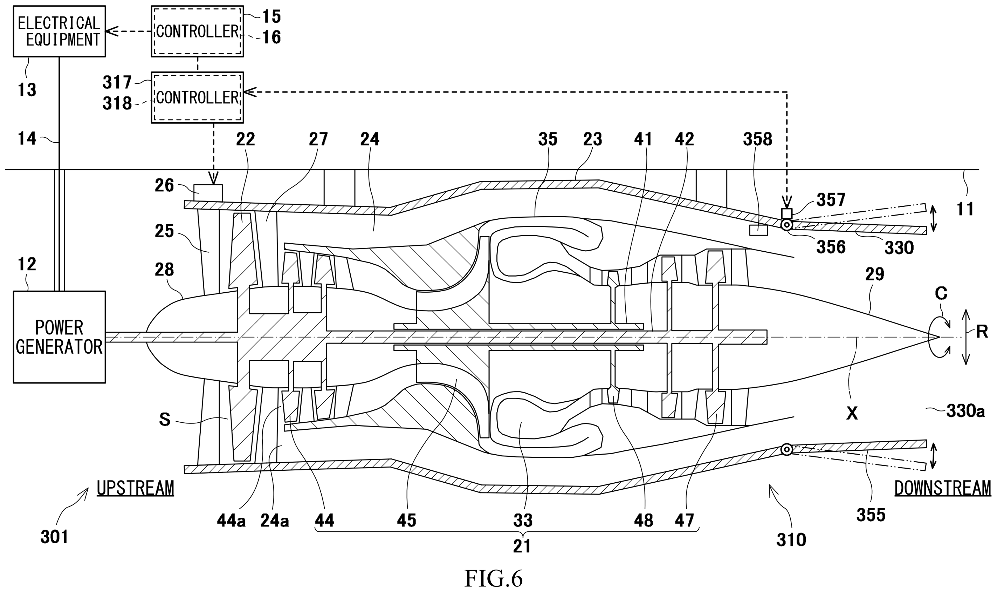

FIG. 6 is a schematic diagram showing an aircraft power generation system 301 according to Embodiment 4. As shown in FIG. 6, a turbo fan engine 310 of the aircraft power generation system 301 includes a variable exhaust nozzle 330 including an exhaust port 330a. The exhaust port 330a is a passage through which exhaust from the turbo fan engine 310 flows. The variable exhaust nozzle 330 can change a sectional area of the exhaust port 330a when viewed in an exhaust direction, i.e., a passage area of the exhaust port 330a. The variable exhaust nozzle 330 is located downstream of the low-pressure turbine 47 and behind the outer shell 23, and the exhaust port 330a is defined between the variable exhaust nozzle 330 and the tail cone 29. Specifically, the variable exhaust nozzle 330 includes: a nozzle tube 355 that defines the exhaust port 330a; and a movable structure 356 that can decrease or increase a passage area of the exhaust port 330a. A nozzle actuator 357 drives the variable exhaust nozzle 330 to change the passage area of the exhaust port 330a. For example, a detailed structure of the variable exhaust nozzle 330 may employ a known structure disclosed in Japanese Patent No. 5673405 incorporated herein.

When processing circuitry 318 of a controller 317 determines that the power generator 12 does not generate electric power during the operation of the turbo fan engine 310, the processing circuitry 318 controls the nozzle actuator 357 such that the passage area of the exhaust port 330a of the variable exhaust nozzle 330 becomes a predetermined reference area. In contrast, when the processing circuitry 318 determines that the power generator 12 generates electric power during the operation of the turbo fan engine 310, the processing circuitry 318 controls the nozzle actuator 357 to increase the passage area of the exhaust port 330a of the variable exhaust nozzle 330. When the pressure in the bypass passage 24 increases during the electric power generation performed by the power generator 12, the processing circuitry 318 may increase the passage area of the exhaust port 330a in accordance with the pressure state of the bypass passage 24. For example, the processing circuitry 318 may measure the pressure by a pressure sensor 358 located in the vicinity of an outlet of the bypass passage 24, and when the pressure is higher than preset pressure, the processing circuitry 318 may control the nozzle actuator 357 to increase the passage area of the exhaust port 330a.

According to this configuration, the passage area of the exhaust port 330a of the variable exhaust nozzle 330 increases during the electric power generation performed by the power generator 12, and the pressure in the bypass passage 24 tends to decrease. Thus, the operation of the fan 22 is prevented from becoming unstable by surging, and the power generator 12 can stably generate electric power. In addition to this control, the processing circuitry 318 may or may not perform the control of the variable stator vanes 25 described in Embodiments 1 to 3. Moreover, since the other components are the same as those in any one of Embodiments 1 to 3, explanations thereof are omitted.

### Embodiment 5

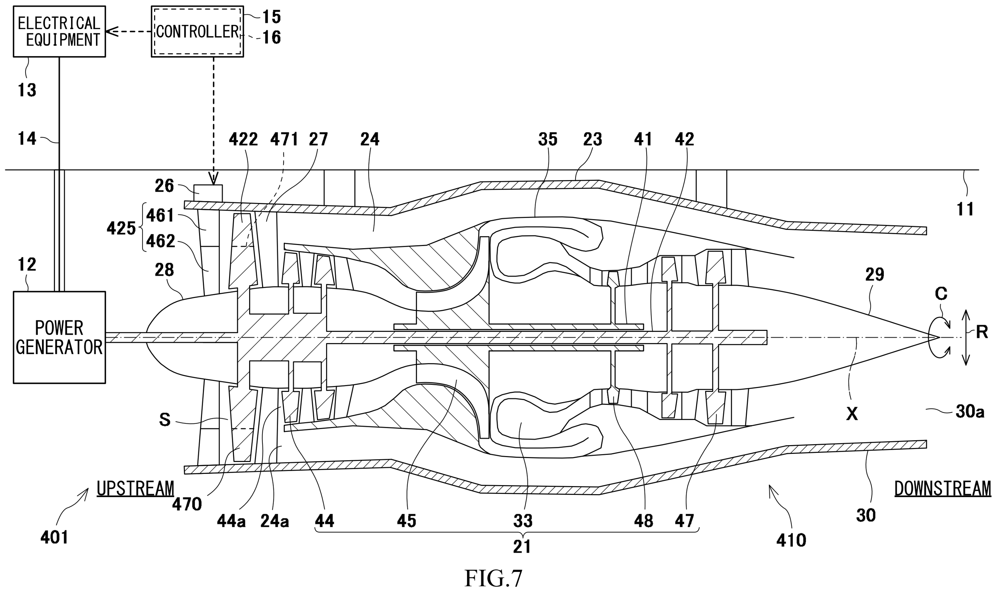

FIG. 7 is a schematic diagram showing an aircraft power generation system 401 according to Embodiment 5. As shown in FIG. 7, in a turbo fan engine 410 of the aircraft power generation system 401, a stator vane assembly 425 is located upstream of a fan 422 in the common air passage S. The stator vane assembly 425 extends in the radial direction R from an outer circumferential edge of the common air passage S to an inner circumferential edge of the common air passage S. The stator vane assembly 425 includes variable stator vanes 461 and fixed stator vanes 462 adjacently located inside the variable stator vanes 461 in the radial direction R. The variable stator vanes 461 can change their installation angles by being driven by the vane actuator 26. The fixed stator vanes 462 are fixed, and the installation angles of the fixed stator vanes 462 are fixed.

Since the variable stator vane 461 and the fixed stator vane 462 are lined up in the radial direction R, a length of the variable stator vane 461 in the radial direction R is shorter than a length from the outer circumferential edge of the common air passage S to the inner circumferential edge of the common air passage S in the radial direction R. Since the variable stator vanes 461 are adjacently located outside the fixed stator vanes 462 in the radial direction R, the variable stator vanes 461 are located closer to the outer circumferential edge of the common air passage S than to the inner circumferential edge of the common air passage S.

For example, in terms of the positions in the radial direction R, inner ends of the variable stator vanes 461 in the radial direction R are located so as to correspond to the boundary between the inlet 24a of the bypass passage 24 and the inlet 44a of the engine core 21. To be specific, the boundary between the variable stator vanes 461 and the fixed stator vanes 462 is located so as to correspond to the boundary between the inlet 24a of the bypass passage 24 and the inlet 44a of the engine core 21. When viewed from the front in the axial direction X, the variable stator vanes 461 overlap the inlet 24a of the bypass passage 24. When viewed from the front in the axial direction X, the fixed stator vanes 462 overlap the inlet 44a of the engine core 21. For example, a ratio obtained by dividing the area of an annular region between a circle passing through the inner ends of the variable stator vanes 461 in the radial direction R and a circle passing through outer ends of the variable stator vanes 461 in the radial direction R by the area of an annular region between a circle passing through inner ends of the fixed stator vanes 462 in the radial direction R and a circle passing through outer ends of the fixed stator vanes 462 in the radial direction may be substantially equal to a ratio obtained by dividing the area of an annular region between an inner circumferential circle of the inlet 24a of the bypass passage 24 and an outer circumferential circle of the inlet 24a of the bypass passage 24 by the area of an annular region between an inner circumferential circle of the inlet 44a of the engine core 21 and an outer circumferential circle of the inlet 44a of the engine core 21.

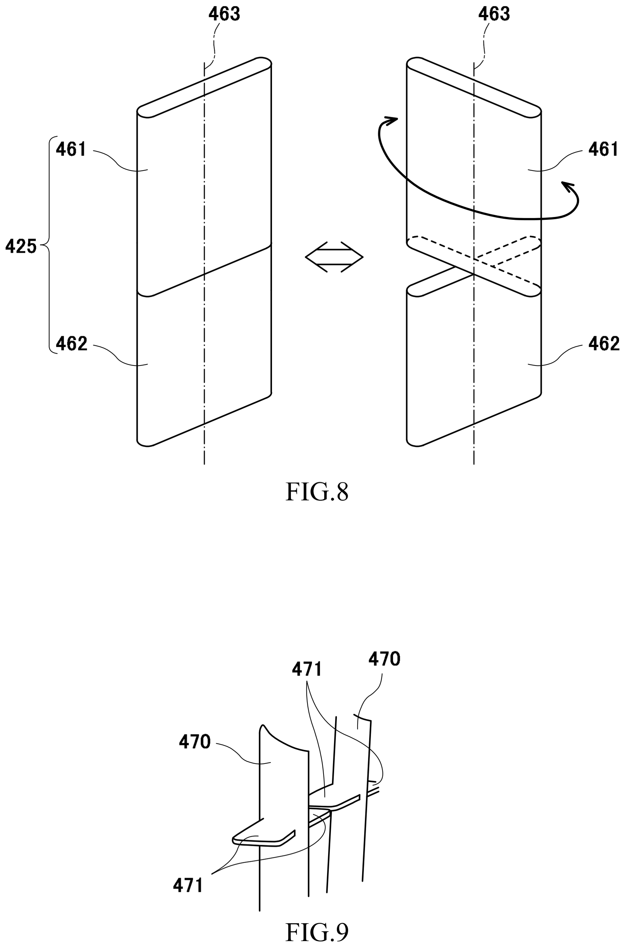

FIG. 8 is a perspective view that explains the operation of the stator vane assembly 425 of FIG. 7. As shown in FIGS. 7 and 8, when the determination in Step S2 of FIG. 3 is No, the vane actuator 26 is controlled such that the installation angle of the variable stator vane 461 becomes equal to the installation angle of the fixed stator vane 462, and the installation angle of the entire stator vane assembly 425 becomes the above-described predetermined reference angle. When the determination in Step S2 of FIG. 3 is Yes, the vane actuator 26 is controlled to change the installation angles of the variable stator vanes 461 without changing the installation angles of the fixed stator vanes 462 such that the flow rate of the air flowing through the variable stator vanes 461 toward the fan 422 decreases. For example, when the determination in Step S2 of FIG. 3 is Yes, the vane actuator 26 may be controlled to increase the installation angles of the variable stator vanes 461. A rotating shaft 463 is located at the variable stator vane 461. When the vane actuator 26 rotates the rotating shaft 463, the variable stator vane 461 rotates about the rotating shaft 463. The rotating shaft 463 is rotatable relative to the fixed stator vane 462. Therefore, even when the rotating shaft 463 rotates, the fixed stator vane 462 does not rotate.

According to the configuration of the stator vane assembly 425, during the electric power generation performed by the power generator 12, a decrease in the flow rate of the air flowing from the fan 422 to the bypass passage 24 can be effectively realized while suppressing a decrease in the flow rate of the air flowing from the fan 422 to the engine core 21. Therefore, a decrease in the force that drives the power generator 12 by the operation of the engine core 21 through the low-pressure shaft 42 can be reliably and suitably prevented.

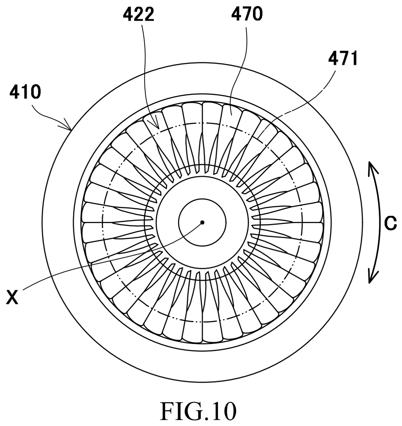

FIG. 9 is a partial perspective view showing the fan 422 of FIG. 7. FIG. 10 is a front view showing the turbo fan engine 410 of FIG. 7. As shown in FIGS. 9 and 10, the fan 422 includes fan blades 470 and shrouds 471 located at the respective fan blades 470. The fan blades 470 extend in the radial direction R. Each shroud 471 extends from both surfaces of each fan blade 470 in the circumferential direction C around the axis X. The shrouds 471 form a tubular shape about the axis X as a whole.

As shown in FIGS. 7 and 10, in terms of the positions in the radial direction R, the shrouds 471 are located so as to correspond to the boundary between the inlet 24a of the bypass passage 24 and the inlet 44a of the engine core 21. When viewed from the front in the axial direction X, a region of the fan 422 which is located outside the shrouds 471 in the radial direction R overlaps the inlet 24a of the bypass passage 24. When viewed from the front in the axial direction X, a region of the fan 422 which is located inside the shrouds 471 in the radial direction R overlaps the inlet 44a of the engine core 21. For example, a ratio obtained by dividing the area of an annular region between an inner circumferential circle of a portion of the fan 422 which is located outside the shrouds 471 in the radial direction R and an outer circumferential circle of the portion of the fan 422 which is located outside the shrouds 471 in the radial direction R by the area of an annular region between an inner circumferential circle of a portion of the fan 422 which is located inside the shrouds 471 in the radial direction R and an outer circumferential circle of the portion of the fan 422 which is located inside the shrouds 471 in the radial direction R may be substantially equal to the ratio obtained by dividing the area of the annular region between the inner circumferential circle of the inlet 24a of the bypass passage 24 and the outer circumferential circle of the inlet 24a of the bypass passage 24 by the area of the annular region between the inner circumferential circle of the inlet 44a of the engine core 21 and the outer circumferential circle of the inlet 44a of the engine core 21.

According to the configuration of the fan 422, the air flowing through a region inside the variable stator vanes 461 in the radial direction R in the common air passage S located upstream of the fan 422 is smoothly guided by the shrouds 471 to the engine core 21. Therefore, the decrease in the force that drives the power generator 12 by the operation of the engine core 21 through the low-pressure shaft 42 can be further suitably prevented. When the stator vane 27 is located downstream of the fan and upstream of the bypass passage 24, components similar to the shrouds 471 may be located on the stator vane 27. Since the other components are the same as those in any one of Embodiments 1 to 4, explanations thereof are omitted.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The functionality of the elements disclosed herein may be implemented using circuitry or processing circuitry which includes general purpose processors, special purpose processors, integrated circuits, ASICs ("Application Specific Integrated Circuits"), FPGAs ("Field Programmable Gate Arrays"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The following aspects disclose preferred embodiments.

### First Aspect

An aircraft power generation system including:
a turbo fan engine including
   an engine core including a low-pressure compressor, a high-pressure compressor, a combustor, a high-pressure turbine, a low-pressure turbine, a low-pressure shaft mechanically connecting the low-pressure compressor to the low-pressure turbine, and a high-pressure shaft mechanically connecting the high-pressure compressor to the high-pressure turbine,
   a fan located upstream of the engine core and driven by the low-pressure shaft,
   a bypass passage located downstream of the fan and outside the engine core,
   a variable stator vane which is located upstream of the fan and whose installation angle is variable, and
   a vane actuator that drives the variable stator vane;
a power generator mechanically connected to the low-pressure shaft; and
processing circuitry configured to control the vane actuator, wherein
the processing circuitry is configured to
   determine whether or not the power generator generates electric power during an operation of the turbo fan engine,
   when it is determined that the power generator does not generate the electric power during the operation of the turbo fan engine, execute a normal mode of controlling the vane actuator such that the installation angle of the variable stator vane becomes a predetermined reference angle, and
   when it is determined that the power generator generates the electric power during the operation of the turbo fan engine, execute an electric power generating mode of controlling the vane actuator to change the installation angle of the variable stator vane such that the flow rate of air flowing through the fan decreases.

According to this configuration, the flow rate of the air flowing through the fan during the electric power generation performed by the power generator decreases. Therefore, large driving force can be transmitted from the low-pressure shaft of the engine core to the power generator by reducing the work of the fan. As a result, the power generator can efficiently generate electric power while suppressing an increase in the size of the power generator.

### Second Aspect

The aircraft power generation system according to the first aspect, wherein:
the processing circuitry is further configured to detect a predetermined operation request for electrical equipment electrically connected to the power generator; and
determining whether or not the power generator generates the electric power includes determining that the power generator generates the electric power when the operation request is detected.

According to this configuration, the electric power generation performed by the power generator can be easily grasped.

### Third Aspect

The aircraft power generation system according to the second aspect, wherein:
the processing circuitry is configured to acquire information indicating a flight state; and
in the electric power generating mode, the processing circuitry changes the installation angle in accordance with the flight state information.

According to this configuration, the fan rotational speed and the amount of electric power generated can be stabilized regardless of a change in the flight state.

### Fourth Aspect

The aircraft power generation system according to the second or third aspect, wherein:
the processing circuitry is configured to acquire information indicating an amount of electric power required; and
in the electric power generating mode, the processing circuitry changes the installation angle in accordance with the amount of electric power required.

According to this configuration, the power generator can realize the electric power generation in accordance with the amount of electric power required, without excess or shortage.

### Fifth Aspect

The aircraft power generation system according to any one of the first to fourth aspects, further including a current sensor that detects a current generated by the power generator, wherein
determining whether or not the power generator generates the electric power includes determining that the power generator generates the electric power when the current sensor detects a current value equal to or greater than a predetermined value.

According to this configuration, determining whether to switch to the electric power generating mode can be easily performed based on electric power generation information of the power generator.

### Sixth Aspect

The aircraft power generation system according to the fifth aspect, wherein:
the processing circuitry is configured to acquire a corrected rotational speed of the fan; and
in the electric power generating mode, the processing circuitry controls the vane actuator such that the corrected rotational speed becomes a target corrected rotational speed.

According to this configuration, the fan rotational speed can be adjusted without depending on the adjustment of the fuel.

### Seventh Aspect

The aircraft power generation system according to any one of the first to sixth aspects, wherein:
the turbo fan engine further includes
   a variable exhaust nozzle located downstream of the low-pressure turbine and including an exhaust port whose passage area is variable and
   a nozzle actuator that drives the variable exhaust nozzle to change the passage area of the exhaust port; and
the processing circuitry is configured to
   when it is determined that the power generator does not generate the electric power during the operation of the turbo fan engine, control the nozzle actuator such that the passage area of the exhaust port of the variable exhaust nozzle becomes a predetermined size and
   when it is determined that the power generator generates the electric power during the operation of the turbo fan engine, control the nozzle actuator to increase the passage area of the exhaust port of the variable exhaust nozzle.

According to this configuration, the passage area of the exhaust port of the variable exhaust nozzle increases during the electric power generation performed by the power generator, and the pressure in the bypass passage tends to decrease. Thus, the operation of the fan is prevented from becoming unstable by surging, and the power generator can stably generate electric power.

### Eighth Aspect

The aircraft power generation system according to any one of the first to seventh aspects, wherein:
the power generator includes a first power generator; and
the aircraft power generation system further includes a second power generator mechanically connected to the high-pressure shaft.

According to this configuration, the second power generator can be utilized to generate electric power required by the airframe or the turbo fan engine, and in addition, the first power generator can be utilized to additionally generate electric power. This can meet various electric power generation needs of the aircraft.

### Ninth Aspect

The aircraft power generation system according to any one of the first to eighth aspects, wherein the power generator is located in front of the engine core on an axis of the low-pressure shaft.

According to this configuration, the power generator connected to the low-pressure shaft can be easily arranged.

### Tenth Aspect

The aircraft power generation system according to any one of the first to ninth aspects, wherein:
when viewed in an axial direction of the low-pressure shaft, an inlet of the bypass passage is located outside an inlet of the engine core in a radial direction of the low-pressure shaft;
the variable stator vane is located in a common air passage located upstream of the fan;
a length of the variable stator vane in the radial direction is shorter than a length from an outer circumferential edge of the common air passage located upstream of the fan to an inner circumferential edge of the common air passage in the radial direction; and
the variable stator vane is located closer to the outer circumferential edge than to the inner circumferential edge in the common air passage.

According to this configuration, during the electric power generation performed by the power generator, a decrease in the flow rate of the air flowing from the fan to the bypass passage can be effectively realized while suppressing a decrease in the flow rate of the air flowing from the fan to the engine core. Therefore, the decrease in the force that drives the power generator by the operation of the engine core through the low-pressure shaft can be further suitably prevented.

### Eleventh Aspect

The aircraft power generation system according to the tenth aspect, wherein an inner end of the variable stator vane in the radial direction is located so as to correspond to a boundary between the inlet of the bypass passage and the inlet of the engine core.

According to this configuration, during the electric power generation performed by the power generator, the decrease in the flow rate of the air flowing from the fan to the bypass passage can be effectively realized while suppressing the decrease in the flow rate of the air flowing from the fan to the engine core by the variable stator vane. Therefore, the decrease in the force that drives the power generator by the operation of the engine core through the low-pressure shaft can be further effectively prevented.

### Twelfth Aspect

The aircraft power generation system according to the tenth or eleventh aspect, wherein
the fan includes
a fan blade extending in the radial direction of the low-pressure shaft and
a shroud located so as to correspond to a boundary between the inlet of the bypass passage and the inlet of the engine core and extending from the fan blade in a circumferential direction around the low-pressure shaft.

According to this configuration, the air which has flowed through a region inside the variable stator vane in the radial direction in the common air passage located upstream of the fan can be easily guided to the engine core by the shroud. Therefore, the decrease in the force that drives the power generator by the operation of the engine core through the low-pressure shaft can be further suitably prevented.

### Reference Signs List

- 1, 101, 201, 301, 401: aircraft power generation system
- 2: aircraft
- 10, 410, 410: turbo fan engine
- 12: power generator
- 13: electrical equipment
- 17, 117, 217, 317: controller
- 18, 118, 218, 318: processing circuitry
- 21: engine core
- 22, 422: fan
- 24a: inlet
- 24: bypass passage
- 25: variable stator vane
- 26: vane actuator
- 28: nose cone
- 29: tail cone
- 33: combustor
- 41: high-pressure shaft
- 42: low-pressure shaft
- 44: low-pressure compressor
- 44a: inlet
- 45: high-pressure compressor
- 47: low-pressure turbine
- 48: high-pressure turbine
- 150: current sensor
- 212A: first power generator
- 212B: second power generator
- 330: variable exhaust nozzle
- 330a: exhaust port
- 357: nozzle actuator
- 425: stator vane assembly
- 461: variable stator vane
- 462: fixed stator vane
- 470: fan blade
- 471: shroud
- S: common air passage
- X: axial direction
- R: radial direction
- C: circumferential direction

## Claims

1. An aircraft power generation system comprising:
a turbo fan engine including
an engine core including a low-pressure compressor, a high-pressure compressor, a combustor, a high-pressure turbine, a low-pressure turbine, a low-pressure shaft mechanically connecting the low-pressure compressor to the low-pressure turbine, and a high-pressure shaft mechanically connecting the high-pressure compressor to the high-pressure turbine,
a fan located upstream of the engine core and driven by the low-pressure shaft,
a bypass passage located downstream of the fan and outside the engine core,
a variable stator vane which is located upstream of the fan and whose installation angle is variable, and
a vane actuator that drives the variable stator vane;
a power generator mechanically connected to the low-pressure shaft; and
processing circuitry configured to control the vane actuator, wherein
the processing circuitry is configured to
determine whether or not the power generator generates electric power during an operation of the turbo fan engine,
when it is determined that the power generator does not generate the electric power during the operation of the turbo fan engine, execute a normal mode of controlling the vane actuator such that the installation angle of the variable stator vane becomes a predetermined reference angle, and
when it is determined that the power generator generates the electric power during the operation of the turbo fan engine, execute an electric power generating mode of controlling the vane actuator to change the installation angle of the variable stator vane such that the flow rate of air flowing through the fan decreases.

2. The aircraft power generation system according to claim 1, wherein:
the processing circuitry is further configured to detect a predetermined operation request for electrical equipment electrically connected to the power generator; and
determining whether or not the power generator generates the electric power includes determining that the power generator generates the electric power when the operation request is detected.

3. The aircraft power generation system according to claim 2, wherein:
the processing circuitry is configured to acquire information indicating a flight state; and
in the electric power generating mode, the processing circuitry changes the installation angle in accordance with the flight state information.

4. The aircraft power generation system according to claim 2 or 3, wherein:
the processing circuitry is configured to acquire information indicating an amount of electric power required; and
in the electric power generating mode, the processing circuitry changes the installation angle in accordance with the amount of electric power required.

5. The aircraft power generation system according to any one of claims 1 to 4, further comprising a current sensor that detects a current generated by the power generator, wherein
determining whether or not the power generator generates the electric power includes determining that the power generator generates the electric power when the current sensor detects a current value equal to or greater than a predetermined value.

6. The aircraft power generation system according to claim 5, wherein:
the processing circuitry is configured to acquire a corrected rotational speed of the fan; and
in the electric power generating mode, the processing circuitry controls the vane actuator such that the corrected rotational speed becomes a target corrected rotational speed.

7. The aircraft power generation system according to any one of claims 1 to 6, wherein:
the turbo fan engine further includes
a variable exhaust nozzle located downstream of the low-pressure turbine and including an exhaust port whose passage area is variable and
a nozzle actuator that drives the variable exhaust nozzle to change the passage area of the exhaust port; and
the processing circuitry is configured to
when it is determined that the power generator does not generate the electric power during the operation of the turbo fan engine, control the nozzle actuator such that the passage area of the exhaust port of the variable exhaust nozzle becomes a predetermined size and
when it is determined that the power generator generates the electric power during the operation of the turbo fan engine, control the nozzle actuator to increase the passage area of the exhaust port of the variable exhaust nozzle.

8. The aircraft power generation system according to any one of claims 1 to 7, wherein:
the power generator includes a first power generator mechanically connected to the low-pressure shaft; and
the aircraft power generation system further includes a second power generator mechanically connected to the high-pressure shaft.

9. The aircraft power generation system according to any one of claims 1 to 8, wherein the power generator is located in front of the engine core on an axis of the low-pressure shaft.

10. The aircraft power generation system according to any one of claims 1 to 9, wherein:
when viewed in an axial direction of the low-pressure shaft, an inlet of the bypass passage is located outside an inlet of the engine core in a radial direction of the low-pressure shaft;
the variable stator vane is located in a common air passage located upstream of the fan;
a length of the variable stator vane in the radial direction is shorter than a length from an outer circumferential edge of the common air passage located upstream of the fan to an inner circumferential edge of the common air passage in the radial direction; and
the variable stator vane is located closer to the outer circumferential edge than to the inner circumferential edge in the common air passage.

11. The aircraft power generation system according to claim 10, wherein an inner end of the variable stator vane in the radial direction is located so as to correspond to a boundary between the inlet of the bypass passage and the inlet of the engine core.

12. The aircraft power generation system according to claim 10 or 11, wherein
the fan includes
a fan blade extending in the radial direction of the low-pressure shaft and
a shroud located so as to correspond to a boundary between the inlet of the bypass passage and the inlet of the engine core and extending from the fan blade in a circumferential direction around the low-pressure shaft.
